# EUROPEAN PATENT SPECIFICATION

(11) **EP 2 324 138 B1**
(45) Date of publication and mention of the grant of the patent: **26.12.2018**
(21) Application number: 08781326.7
(22) Date of filing: 03.07.2008
(51) Int. Cl.: C23C 4/18, C23C 18/32, C23C 2/26, B66B 15/04, F16H 55/38, C25D 5/48

(54) **WEAR AND CORROSION RESISTANT COATING HAVING A ROUGHENED SURFACE**
ABNUTZUNGS- UND KORROSIONSBESTÄNDIGER ÜBERZUG MIT EINER AUFGERAUHTEN OBERFLÄCHE
REVÊTEMENT RÉSISTANT À L'USURE ET À LA CORROSION ET AYANT UNE SURFACE RUGUEUSE

(43) Date of publication of application: 25.05.2011
(73) Proprietor: Otis Elevator Company, Farmington CT 06032 (US)
(72) Inventor: FARGO, Richard N., Plainville, Connecticut 06062 (US); SHERRICK, Kathryn Rauss, Bristol, Connecticut 06010 (US); MCKEE, David Wayne, Somers, Connecticut 06071 (US); DEMOS, Jon George, West Hartford, Connecticut 06107 (US)
(74) Representative: Schmitt-Nilson Schraud Waibel Wohlfrom Patentanwälte Partnerschaft mbB
(86) International application number: PCT/US2008/069129
(87) International publication number: WO 2010/002410

(56) References cited:
- EP-A- 1 847 503
- EP-A- 2 006 236
- WO-A-00/59819
- JP-A- 6 158 264
- JP-A- 2007 210 795
- US-A1- 2003 025 109
- MELLALI M ET AL: "Alumina grit blasting parameters for surface preparation in the plasma spraying operation" JOURNAL OF THERMAL SPRAY TECHNOLOGY, vol. 6, no. 2, June 1997 (1997-06), pages 217-227, XP002522952 ASM INTERNATIONAL [US]

## Description

### BACKGROUND

Elevator systems carry passengers, cargo or both between different levels in a building, for example. Some elevator systems operate on a hydraulic machine arrangement to move the elevator car as desired. Other elevator systems are traction-based and rely upon traction between a traction sheave and an elevator roping arrangement to cause desired movement of the elevator car.

Typical traction-based elevator systems include a roping arrangement that has a plurality of tension members such as steel ropes or flat belts, for example. The roping arrangement follows a path defined by sheaves placed strategically within the elevator system. At least one of the sheaves operates as a traction sheave causing the roping arrangement to move responsive to operation of a machine that causes the traction sheave to rotate. Other sheaves are considered idler sheaves that move responsive to movement of the roping arrangement. Controlling the direction and speed of movement of the traction sheave provides the ability to move the elevator car in a desired direction at a desired speed.

It is necessary to have sufficient traction between the traction sheave and the tension members to achieve desired elevator car movement and to control car position, for example. Where round steel rope tension members are used, specially shaped grooves or plastic liners within grooves are used for traction purposes. In systems using flat belts as the tension members, the conventional approach to having a sufficient traction surface on a traction sheave involves sandblasting a steel surface to roughen it. A roughened surface provides more traction than a smoother surface, for example.

It is also necessary to avoid corrosion of an elevator sheave. In round rope systems, lubricant is applied to the ropes. The lubricant provides some corrosion protection. The conventional approach to avoid corrosion in belted systems has been to plate the roughened surface of the sheave with a corrosion resistant material such as hard chrome. The plating protects the surface of the sheave from wear and corrosion.

One shortcoming of the conventional approach is that plating over the roughened surface of the sheave tends to change surface characteristics such as reducing the roughness. This is especially true if the plating has any appreciable thickness. Typically, plating is kept to a maximum thickness of two µm (microns) to minimize altering the desired roughness of the sheave surface. One drawback associated with such a thin plating layer is that it is likely to crack or have voids. Leaving the metal of the sheave surface exposed along such cracks or voids leaves the surface susceptible to corrosion, for example. Additionally, any wear of the very thin layer leaves exposed metal.

US 2003/025109 A1 discloses a traction sheave for engaging an elevator rope, the traction sheeve comprising a traction surface for engaging and driving the elevator rope, and a chrome plating applied to the traction surface and having a thickness of less than 10 µm.

There are other uses of metal components that require a corrosion and wear resistant coating outside of elevator systems.

It would be desirable to provide better wear and corrosion protection while still being able to achieve the necessary surface characteristics for a given situation.

### SUMMARY

Subject-matter of this invention is a method of making an elevator sheave for contacting an elevator load bearing member, the method comprising the steps recited in claim 1. Subject-matter of this invention is also an elevator sheave obtainable by the method of this invention, the elevator sheeve having the features recited in claim 5. Embodiments of this invention are claimed in the respective dependent claims.

The various features and advantages of the disclosed invention will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an example elevator system.
Figure 2 diagrammatically illustrates an example elevator sheave according to this invention.
Figure 3 schematically illustrates an example method according to this invention of applying a corrosion resistant coating to an elevator sheave.

### DETAILED DESCRIPTION

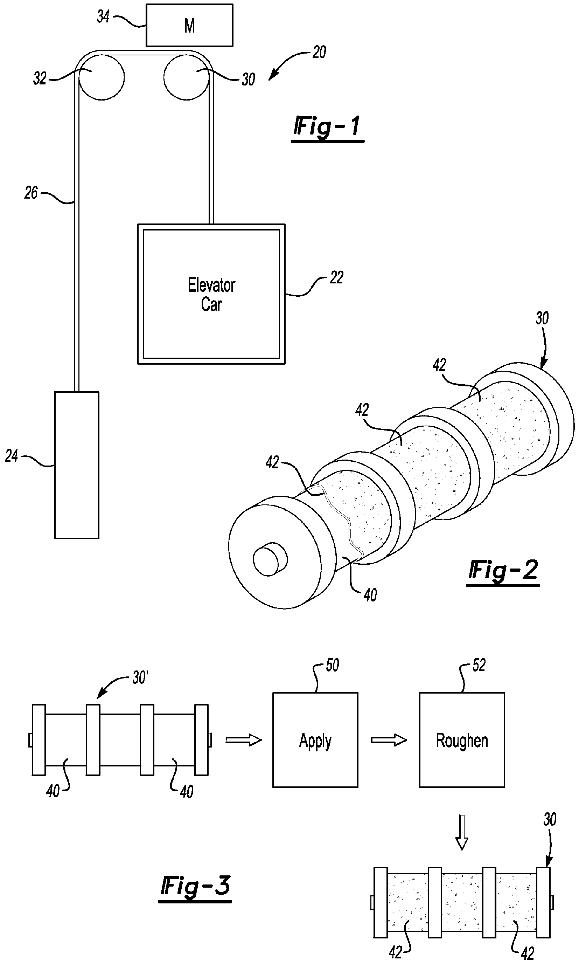

For discussion purposes an elevator system and an elevator component that requires wear and corrosion protection are used as an example implementation. Figure 1 shows selected portions of an elevator system 20. An elevator car 22 and counterweight 24 are suspended by a roping arrangement 26 of tension members. The one-to-one roping arrangement 26 is shown for discussion purposes only. In many examples, the elevator system 20 the roping arrangement has a two-to-one roping ratio. In one example, the tension members include a plurality of round ropes. In another example, the tension members include a plurality of flat belts.

A traction sheave 30 and an idler sheave 32 establish a path along which the roping arrangement 26 travels for purposes of moving the elevator car 22 as desired. An elevator machine 34 causes the necessary movement of the traction sheave 30 to achieve the desired elevator car movement. In certain exemplary applications, the traction sheave 30 could be a surface of the machine shaft rather than a separate component.

The traction sheave 30 has a roughened surface to achieve the necessary traction between the tension members of the roping arrangement 26 and an appropriate surface on the traction sheave 30. The traction sheave 30 also has a corrosion resistant material on the surfaces that are adapted to contact the tension members of the roping arrangement 26.

Figure 2 shows one example traction sheave 30 according to this invention. This example includes a metallic body 40. One example comprises low carbon steel as the material used for forming the metallic body of the traction sheave 30. In this example, the metal body of the traction sheave 30 includes an exterior surface that is smooth. The surfaces of the metallic body 40 that contact the tension members are coated with a corrosion resistant material layer 42. As schematically shown in Figure 2, the corrosion resistant material layer 42 is partially cutaway leaving a part of the sheave body surface 40 exposed only for discussion purposes. The metal of the body 40 is not exposed on a finished example sheave. The corrosion resistant material layers 42 are roughened to achieve a desired traction between the roping arrangement 26 and the traction sheave 30.

Figure 3 schematically illustrates an example method according to this invention of making a traction sheave such as the traction sheave 30 in the example of Figure 2. A metallic traction sheave body 30' is formed having the desired traction sheave configuration. In one example, the traction sheave surfaces 40 of the metallic body are smooth at the initial stage of the procedure shown in Figure 3. At 50, a corrosion resistant material is applied to the surfaces 40. Applying the corrosion resistant material includes plasma spraying the corrosion resistant material onto the sheave body.

The corrosion resistant material is a hard nodular chrome. Such material is selected for its hardness, wear resistance and corrosion resistance properties.

In Figure 3, after the corrosion resistant material is applied to the sheave surfaces 40, the corrosion resistant material layer is roughened at 52. A blasting technique is used for roughening the surface of the corrosion resistant material. Providing a roughened surface provides the necessary traction between the traction sheave 30 and the roping arrangement 26. One example includes using an alumina blasting media and controlling the blasting parameters to achieve a desired roughness on the surface without introducing any cracking in the corrosion resistant material layer 42.

Prior to this invention it was believed that blasting after applying a corrosion resistant material would cause cracking. Therefore, the conventional technique involved applying a very thin layer (e.g., two µm thick) of a corrosion resistant material onto a previously roughened surface. Such a thin layer was required to maintain the desired roughness of the surface. Such a thin layer, however, prevented any subsequent treatment because it would result in cracking the plating on the surface. The inventive technique differs substantially from previous techniques in that the corrosion resistant material layer is roughened after it is applied to the surface.

With the disclosed technique, it is possible to apply a thicker layer of corrosion resistant material. A thicker layer provides longer-lasting wear and corrosion resistance and allows for subsequently treating that layer to achieve the desired roughness. The thickness is greater than 15µm for the corrosion resistant material layer 42. Another example includes a thickness up to 60 µm. One particular example has a thickness between 15 and 30 µm. Such thicknesses are useful for providing corrosion protection, wear resistance and the ability to roughen the surface of the layer 42 without causing it to crack or otherwise be damaged in an undesirable manner. Depending on the selected thickness of the corrosion resistant material layer 42 and the particular blasting media, the particulars of the blasting technique can be tuned to achieve a desired roughness while avoiding cracking the applied material layer 42. Given this description, those skilled in the art will be able to achieve a desired roughness for their particular application that meets their particular needs.

As shown in Figure 3, the resulting traction sheave 30 has sheave surfaces adapted to contact load bearing members of the roping arrangement 26 that are coated with a corrosion resistant material layer 42 that is sufficiently roughened to achieve the desired traction characteristics.

The preceding description is exemplary rather than limiting in nature. Variations and modifications to the disclosed examples may become apparent to those skilled in the art that do not necessarily depart from this invention. The scope of legal protection given to this invention can only be determined by studying the following claims.

## Claims

1. A method of making an elevator sheave for contacting an elevator load bearing member, comprising the steps of:
applying a wear and corrosion resistant material layer onto a surface of the elevator sheave to provide a thickness of the corrosion resistant material of greater than 15 µm; and
roughening the wear and corrosion resistant material layer subsequent to the applying, wherein
the applying step comprises plasma spraying the wear and corrosion resistant material onto the surface,
the wear and corrosion resistant material is a hard nodular chrome, and
roughening the corrosion resistant material layer uses blasting the wear and corrosion resistant material layer.

2. The method of claim 1, comprising
using an alumina blasting media.

3. The method of claim 1, comprising
applying the wear and corrosion resistant material layer to provide a thickness of the corrosion resistant material between 15 and 60 µm (microns).

4. The method of claim 3, comprising providing a thickness of between 15 and 30 µm.

5. An elevator sheave obtainable by a method according to any one of claims 1 to 4, the elevator sheave comprising
a metallic body having the sheave surface adapted to contact an elevator load bearing member; and
the wear and corrosion resistant material layer on the sheave surface, the corrosion resistant material having a thickness greater than 15 µm.

6. The elevator sheave of claim 5, wherein the metallic body sheave surface has a first roughness and the wear and corrosion resistant material layer has an exterior surface having a second, rougher roughness.

7. The elevator sheave of claim 5 or 6, wherein the thickness of the corrosion resistant material is less than 60 µm.

8. The elevator sheave of claim 7, wherein the thickness of the corrosion resistant material is up to 30 µm.

## Patentansprüche

1. Verfahren zur Herstellung einer Aufzugscheibe zum Kontakt mit einem aufzuglasttragenden Element, das die folgenden Schritte umfasst:
Aufbringen einer abnutzungs- und korrosionsbeständigen Materialschicht auf einer Fläche der Aufzugscheibe, um eine Dicke des korrosionsbeständigen Materials von mehr als 15 µm bereitzustellen; und
Anrauen der abnutzungs- und korrosionsbeständigen Materialschicht nach dem Auftragen, wobei
der Schritt des Auftragens Plasmaspritzen des abnutzungs- und korrosionsbeständigen Materials auf die Fläche umfasst,
wobei das abnutzungs- und korrosionsbeständige Material ein Hartchrom mit modularer Struktur ist; und
wobei Anrauen der korrosionsbeständigen Materialschicht unter Verwendung von Strahlen der abnutzungs- und korrosionsbeständigen Materialschicht geschieht.

2. Verfahren nach Anspruch 1, umfassend
das Verwenden eines Aluminiumoxid-Strahlmittels.

3. Verfahren nach Anspruch 1, umfassend
Aufbringen der abnutzungs- und korrosionsbeständigen Materialschicht, um eine Dicke des korrosionsbeständigen Materials zwischen 15 und 60 µm (Mikrometer) bereitzustellen.

4. Verfahren nach Anspruch 3, das das Bereitstellen einer Dicke zwischen 15 und 30 µm umfasst.

5. Aufzugscheibe, die durch ein Verfahren nach einem der Ansprüche 1 bis 4 erhalten werden kann, wobei die Aufzugscheibe Folgendes umfasst
einen Metallkörper, der eine Scheibenoberfläche aufweist, die zum Kontakt mit einem aufzuglasttragenden Element ausgebildet ist; und
die abnutzungs- und korrosionsbeständige Materialschicht auf der Scheibenfläche, wobei das korrosionsbeständige Material eine Dicke von mehr als 15 µm aufweist.

6. Aufzugscheibe nach Anspruch 5, wobei die Metallkörperaufzugscheibe eine erste Rauigkeit aufweist und die abnutzungs- und korrosionsbeständige Materialschicht eine zweite, stärkere Rauigkeit aufweist.

7. Aufzugscheibe nach Anspruch 5 oder 6, wobei die Dicke des korrosionsbeständigen Materials weniger als 60 µm beträgt.

8. Aufzugscheibe nach Anspruch 7, wobei die Dicke des korrosionsbeständigen Materials bis zu 30 µm beträgt.

## Revendications

1. Procédé de fabrication d'une poulie d'ascenseur destinée à être en contact avec un élément de support de charge pour ascenseur, comprenant les étapes :
d'application d'une couche de matériau résistant à l'usure et à la corrosion sur une surface de la poulie d'ascenseur de sorte que le matériau résistant à la corrosion ait une épaisseur supérieure à 15 µm ; et
d'application d'une rugosité à la couche de matériau résistant à l'usure et à la corrosion à la suite de l'étape d'application, dans lequel
l'étape d'application comprend la pulvérisation au plasma du matériau résistant à l'usure et à la corrosion sur la surface, le matériau résistant à l'usure et à la corrosion est du chrome nodulaire dur, et
l'application d'une rugosité à la couche de matériau résistant à l'usure et à la corrosion recourt à la projection de particules sur la couche de matériau résistant à l'usure et à la corrosion.

2. Procédé selon la revendication 1, comprenant l'utilisation d'un agent de projection d'alumine.

3. Procédé selon la revendication 1, comprenant l'application de la couche de matériau résistant à l'usure et à la corrosion de sorte que le matériau résistant à la corrosion ait une épaisseur comprise entre 15 et 60 µm (microns).

4. Procédé selon la revendication 3, comprenant la réalisation d'une épaisseur comprise entre 15 et 30 µm.

5. Poulie d'ascenseur pouvant être obtenue par un procédé selon l'une quelconque des revendications 1 à 4, la poulie d'ascenseur comprenant
un corps métallique comportant la surface de poulie adaptée pour être en contact avec un élément de support de charge pour ascenseur ; et
la couche de matériau résistant à l'usure et à la corrosion sur la surface de poulie, le matériau résistant à la corrosion ayant une épaisseur supérieure à 15 µm.

6. Poulie d'ascenseur selon la revendication 5, dans laquelle la surface de poulie du corps métallique a une première rugosité et la couche de matériau résistant à l'usure et à la corrosion a une surface extérieure dotée d'une seconde rugosité, plus élevée.

7. Poulie d'ascenseur selon la revendication 5 ou la revendication 6, dans laquelle l'épaisseur du matériau résistant à la corrosion est inférieure à 60 µm.

8. Poulie d'ascenseur selon la revendication 7, dans laquelle l'épaisseur du matériau résistant à la corrosion est de 30 µm maximum.
